# FASCICULE DE BREVET EUROPEEN

(11) **EP 0 674 153 B1**
(45) Date de publication et mention de la délivrance du brevet: **06.05.1998**
(21) Numéro de dépôt: 94104417.4
(22) Date de dépôt: 21.03.1994
(51) Int. Cl.: G01D 5/22

(54) **Unité tubulaire de bobines d'un transducteur de mesure de déplacements**
Röhrenförmige Spuleneinheit eines Verschiebungsmessaufnehmers
Tubular coil unit for a displacement measuring transducer

(43) Date de publication de la demande: 27.09.1995
(73) Titulaire: Tesa Brown & Sharpe S.A., 1020 Renens (CH)
(72) Inventeur: Züger, Eric, CH-1110 Morges (CH)
(74) Mandataire: BOVARD AG - Patentanwälte

(56) Documents cités:
- DE-U- 9 013 582
- GB-A- 2 080 632
- PATENT ABSTRACTS OF JAPAN vol. 5, no. 145 (E-074) 12 Septembre 1981 & JP-A-56 079 844 (HITACHI LTD) 30 Juin 1981
- Electronique Industrielle, Juilliet-Août 1963, Vol. 65, pages 229-233, Jean-Noel Herve, "Mesure des micro-déplacements"

## Description

La présente invention a pour objet une unité tubulaire de bobines d'un transducteur de mesure de déplacements de type inductif comprenant une pluralité de bobines et d'entretoises empilées entre deux flasques d'extrémité à l'intérieur d'un tube et dans lequel la répartition des bobines doit être symétrique par rapport au milieu de la longueur de l'unité.

Les transducteurs connus de ce genre sont utilisés pour produire un signal électrique représentatif des déplacements relatifs d'une touche de palpage par rapport au corps de référence de certains palpeurs de mesure employés notamment pour la mesure et le contrôle dimensionnel de pièces mécaniques en atelier de fabrication.

Dans ces palpeurs, une touche de palpage mobile est reliée par une tige à un noyau en matériau magnétique, guidée en translation à l'intérieur d'une unité tubulaire de bobines fixée dans le corps de référence, de manière à modifier l'impédance des bobines et produire ainsi le signal électrique de mesure. La valeur algébrique de la mesure est définie par rapport à un zéro signifié par la position d'un plan transversal médian de l'unité de bobines, c'est-à-dire, au milieu de la longueur du tube dans lequel sont empilés ses éléments : bobines, entretoises et flasques.

Le document de brevet GB-A-208 0632 décrit un détecteur de déplacements, en particulier un vibromètre, présentant une construction de ce type. L'unité tubulaire comprend dans ce dispositif une bobine primaire ainsi que deux bobines secondaires montées entre deux flasques et séparées par une entretoise en matériau non-magnétique. La fonction principale de l'entretoise est de faciliter l'enroulement des bobines secondaires.

Pour obtenir un transducteur avec de bonnes performances, ayant une erreur de linéarité la plus faible possible pour une construction donnée, et compte tenu du mode d'assemblage par empilage des éléments qui composent l'unité de bobines, il serait nécessaire d'assembler bobines, entretoises et flasques à leur position nominale de symétrie, ce qui n'est pratiquement pas possible à cause de la dispersion des cotes de longueur de ces éléments due aux tolérances d'usinage.

En effet, ou bien la somme des longueurs des bobines, des flasques et des entretoises est inférieure à la longueur du tube, ou bien elle lui est supérieure. Dans le premier cas le jeu résiduel provoque un montage non symétrique et génère une grande erreur de linéarité. Dans le deuxième cas, l'excédent de longueur provoque un problème d'assemblage des flasques dans le tube.

Seul le cas problématique et relativement hasardeux d'une somme des longueurs des bobines, entretoises et flasques égale à la longueur du tube permettrait un montage optimal de l'unité de bobines.

L'invention a pour but de remédier aux inconvénients précités relatifs à la dispersion des cotes de fabrication des éléments empilés dans le tube de l'unité de bobines.

A cet effet, l'unité de bobines selon l'invention est conforme à la définition donnée par la revendication 1.

De la sorte, toute différence, positive ou négative, entre la somme des longueurs des éléments de l'unité de bobines et la longueur du tube de l'unité dans lequel ils sont empilés, est compensée par la déformation de l'entretoise en matériau élastique qui prend un état plus ou moins comprimé entre deux éléments selon la grandeur de la différence précitée. Ceci joint à la répartition symétrique des bobines de l'unité dans le tube fait que l'entretoise en matériau élastique constitue un moyen de centrage automatique permettant d'obtenir la plus petite erreur de linéarité possible du signal électrique de mesure produit pour une construction donnée, cette erreur de linéarité étant ainsi rendue toujours symétrique par rapport à la position zéro du système.

A partir de la conception de base de l'invention, des structures d'empilages différents des éléments qui composent l'unité de bobines sont proposées.

Dans une première forme d'exécution, l'unité de bobines comporte deux bobines et une entretoise en matériau élastique comprimée entre elles, les deux bobines étant par ailleurs en appui contre les deux flasques d'extrémité du tube. Cette première forme d'exécution convient aux transducteurs les plus courants ne comportant que deux bobines.

Dans une deuxième forme d'exécution appropriée aux transducteurs dans lesquels une bobine primaire est placée entre deux bobines secondaires, l'unité de bobines comporte trois bobines et deux entretoises en matériau élastique de même longueur comprimées chacune d'elles entre deux bobines voisines, cet ensemble de trois bobines et de deux entretoises étant en appui par ses deux extrémités contre les deux flasques d'extrémité du tube.

Dans une variante de la première forme d'exécution, l'unité de bobines comporte deux bobines, une entretoise en matériau rigide entre les deux bobines, et deux entretoises en matériau élastique de même longueur comprimées chacune d'elles entre l'une des deux flasques d'extrémité du tube et l'une des deux bobines.

Enfin dans une variante de la seconde forme d'exécution l'unité de bobines comporte trois bobines, deux entretoises rigides de même longueur situées chacune d'elles entre deux bobines voisines et deux entretoises en matériau élastique de même longueur comprimées chacune d'elles entre l'une des deux flasques du tube et l'ensemble des trois bobines et des deux entretoises rigides précitées.

Le dessin annexé représente, schématiquement et à titre d'exemples, les deux formes d'exécution et les deux variantes précitées, ainsi qu'un palpeur équipé d'un transducteur de mesure comprenant une unité de bobines apte à bénéficier de l'avantage de l'invention.

La figure 1 est une vue de profil, en coupe axiale partielle, du palpeur.

La figure 2 est une vue de profil, en coupe axiale, de la première forme d'exécution.

La figure 3 est une vue de profil, en coupe axiale, de la seconde forme d'exécution.

Les figures 4 et 5 représentent respectivement une variante de la première et de la seconde forme d'exécution.

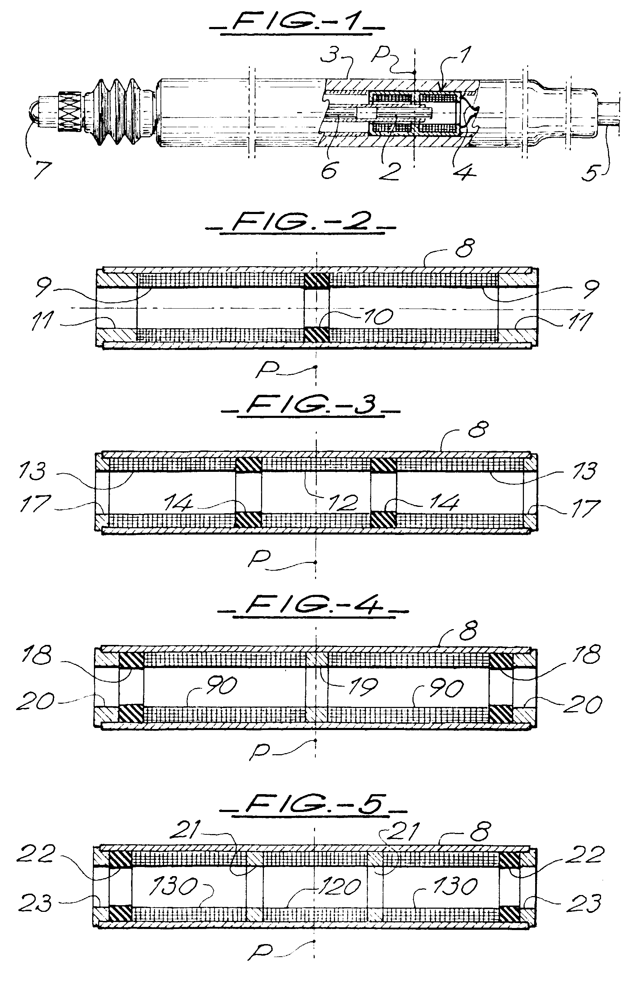

Le palpeur représenté partiellement figure 1 comporte un transducteur électromagnétique de mesure de déplacements composé d'une unité tubulaire de bobines 1 et d'un noyau en matériau magnétique mobile 2.

L'unité de bobines 1 est maintenue en position fixe à l'intérieur d'un corps de référence 3 et alimentée par les conducteurs 4 d'un câble 5.

Le noyau en matériau magnétique 2 est fixé en bout d'une tige 6 guidée en translation dans le corps 3. La tige 6 comporte une touche de palpage 7 extérieure au corps 3 dont les déplacements par translation selon l'axe longitudinal du palpeur provoquent des déplacements égaux et de mêmes sens du noyau 2 à l'intérieur de l'unité de bobines 1. Un signal de mesure des déplacements relatifs de la touche de palpage 7 par rapport au corps de référence 3 du palpeur est ainsi produit par modification de l'impédance des bobines de l'unité 1. La valeur algébrique de la mesure est définie par rapport à un zéro signifié par un plan transversal médian P de l'unité de bobines 1 constituant le plan de symétrie de la répartition des bobines dont la position est souhaitée immuable pour une construction donnée, cette construction pouvant être différente selon le type considéré de l'unité de bobines.

Dans la première forme d'exécution représentée figure 2, l'unité de bobines comporte un tube de maintien 8 dans lequel sont empilées deux bobines 9, une entretoise 10 et deux flasques d'extrémité 11.

L'entretoise 10, en matériau élastique tel que par exemple du caoutchouc diélectrique, est placée entre les deux bobines 9. Le tube 8 et les deux flasques 11 sont en matériau rigide, l'ensemble des deux bobines 9 et de l'entretoise 10 étant enserré entre les deux flasques 11 et ces derniers étant fixés au tube 8, par exemple par collage ou emmanchement forcé.

La longueur de l'entretoise 10 en matériau élastique, considérée dans la direction de la longueur de l'unité tubulaire ainsi construite, est définie de manière à ce que cette entretoise 10 soit toujours comprimée entre les deux bobines 9, quelle que soit la dispersion des cotes de longueur des autres éléments dans les limites de leurs tolérances de fabrication.

L'entretoise en matériau élastique 10 comprimée entre les deux bobines 9 permet ainsi leur montage symétrique par rapport aux surfaces de contact intérieures des deux flasques 11 contre lesquelles elles sont appuyées. Ceci fait que l'erreur de linéarité du signal de mesure causée par la dispersion des cotes de longueur des éléments de l'unité empilés dans le tube 8 est la plus petite possible, parce qu'elle est symétrique par rapport au zéro du système signifié par le plan médian P.

La seconde forme d'exécution représentée figure 3 est une unité tubulaire de bobines d'un transducteur électromagnétique dans lequel une bobine primaire 12 est logée dans le tube 8 entre deux bobines secondaires 13. Dans cette construction, deux entretoises 14 en matériau élastique, choisies de même longueur, sont comprimées chacune d'elles entre deux des trois bobines, et cet ensemble de trois bobines et de deux entretoises en matériau élastique est en appui par ses deux extrémités contre deux flasques d'extrémité 16 du tube 8.

De la sorte, la bobine primaire 12 se trouve automatiquement centrée entre les deux bobines secondaires 13 et l'erreur de linéarité est la plus faible possible ici également du fait de sa symétrie par rapport au zéro du système signifié par le plan médian P.

Bien entendu, la même configuration s'applique au cas où l'on aurait une bobine secondaire logée dans le tube entre deux bobines primaires.

Les variantes des deux formes d'exécution qui viennent d'être décrites et qui sont représentées par les figures 4 et 5 procurent les mêmes avantages relatifs à la sysmétrie de l'erreur de linéarité par rapport au zéro du système signifié par le plan médian P.

Dans la variante de la première forme d'exécution représentée figure 4, l'unité comporte deux bobines 90, une entretoise en matériau rigide 19 entre les deux bobines et deux entretoises en matériau élastique 18 comprimées chacune d'elles entre l'une des deux flasques d'extrémité 20 du tube 8 et l'une des deux bobines 90.

Dans la variante de la seconde forme d'exécution représentée figure 5, l'unité comporte trois bobines, une primaire 120 et deux secondaires 130, deux entretoises rigides 21 de même longueur situées chacune d'elles entre deux des trois bobines, et deux entretoises en matériau élastique, de même longueur, comprimées chacune d'elles entre l'une des deux flasques 23 du tube 8 et l'ensemble des trois bobines et des deux entretoises précitées.

Ici aussi, la même configuration s'applique au cas où l'on aurait une bobine secondaire comprise entre deux bobines primaires.

Bien entendu, le concept selon l'invention s'applique aussi à des unités de bobines comportant un nombre de bobines plus élevé que dans les exemples décrits.

## Revendications

1. Unité tubulaire de bobines d'un transducteur de mesure de déplacements du type inductif comprenant une pluralité de bobines et d'entretoises empilées entre deux flasques d'extrémité à l'intérieur d'un tube, et dans lequel la répartition des bobines doit être symétrique par rapport au milieu de la longueur de l'unité, caractérisée en ce qu'elle comporte au moins une entretoise en matériau élastique (10, 14 18, 22) comprimée entre deux éléments de l'empilage.

2. Unité selon la revendication 1, caractérisée en ce qu'elle comporte deux bobines (9) et une entretoise (10) en matériau élastique comprimée entre elles, les deux bobines étant par ailleurs en appui contre les deux flasques (11) d'extrémité du tube (8).

3. Unité selon la revendication 1, caractérisée en ce qu'elle comporte trois bobines (12, 13) et deux entretoises (14) en matériau élastique de même longueur comprimées chacune d'entre elles entre deux des trois bobines, cet ensemble de trois bobines et de deux entretoises étant en appui par ses deux extrémités contre les deux flasques (17) d'extrémité du tube (8).

4. Unité selon la revendication 1, caractérisée en ce qu'elle comporte deux bobines (90), une entretoise en matériau rigide (19) entre les deux bobines, et deux entretoises en matériau élastique (18) de même longueur comprimées chacune d'elles entre l'une des deux flasques (20) d'extrémité du tube (8) et l'une des deux bobines.

5. Unité selon la revendication 1, caractérisée en ce qu'elle comporte trois bobines (120, 130), deux entretoises rigides (21) de même longueur situées chacune d'elles entre deux des trois bobines et deux entretoises en matériau élastique (22) de même longueur comprimées chacune d'elles entre l'une des deux flasques (23) du tube (8) et l'ensemble des trois bobines et des deux entretoises rigides précitées.

## Patentansprüche

1. Röhrenförmige Spuleneinheit eines induktiven Verschiebungsmessaufnehmers, enthaltend eine Mehrzahl von Spulen und Verbindungen, die zwischen zwei Endflanschen im Inneren eines Rohres geschichtet sind, in welchem die Verteilung der Spulen in Bezug auf die Mitte der Länge der Einheit symmetrisch sein muss, dadurch gekennzeichnet, dass sie mindestens eine Verbindung aus elastischem Material (10, 14, 18, 22) enthält, die zwischen zwei Elementen der Schichtung zusammengedrückt ist.

2. Einheit nach Anspruch 1, dadurch gekennzeichnet, dass sie zwei Spulen (9) und eine zwischen ihnen zusammengedrückte Verbindung (10) aus elastischem Material enthält, wobei die beiden Spulen ausserdem an den zwei Endflanschen (11) des Rohres (8) anliegen.

3. Einheit nach Anspruch 1, dadurch gekennzeichnet, dass sie drei Spulen (12, 13) und zwei gleich lange Verbindungen (14) aus elastischem Material enthält, von denen jede zwischen zwei der drei Spulen zusammengedrückt ist, wobei diese Einheit von drei Spulen und zwei Verbindungen mit ihren zwei Enden an den zwei Endflanschen (17) des Rohres (8) anliegt.

4. Einheit nach Anspruch 1, dadurch gekennzeichnet, dass sie zwei Spulen (90), eine Verbindung aus starrem Material (19) zwischen den zwei Spulen und zwei gleich lange Verbindungen aus elastischem Material (18) enthält, von denen jede zwischen einem der zwei Endflansche (20) des Rohres (8) und der einen der zwei Spulen zusammengedrückt ist.

5. Einheit nach Anspruch 1, dadurch gekennzeichnet, dass sie drei Spulen (120, 130), zwei gleich lange starre Verbindungen (21), von denen jede zwischen zwei der drei Spulen liegt und zwei gleich lange Verbindungen aus elastischem Material (22) enthält, von denen jede zwischen dem einen der zwei Flansche (23) des Rohres (8) und der Einheit der drei Spulen und der zwei obenerwähnten starren Verbindungen zusammengedrückt ist.

## Claims

1. Tubular coil unit of an inductive transducer for measuring displacements, comprising a plurality of coils and spacers aligned between two end flanges within a tube, and wherein the distribution of the coils must be symmetrical with respect to the middle of the length of the unit, characterised in that it comprises at least one spacer of elastic material (10, 14, 18, 22) compressed between two elements of the alignment.

2. Unit according to claim 1, characterised in that it comprises two coils (9) and a spacer (10) of elastic material compressed between them, the two coils further resting against the two end flanges (11) of the tube (8).

3. Unit according to claim 1, characterised in that it comprises three coils (12, 13) and two spacers (14) of elastic material of the same length, each compressed between two of the three coils, the two ends of this assembly of three coils and two spacers resting against the two end flanges (17) of the tube (8).

4. Unit according to claim 1, characterised in that it comprises two coils (90), a spacer of rigid material (19) between the two coils, and two spacers of elastic material (18) of the same length, each compressed between one of the two end flanges (20) of the tube (8) and one of the two coils.

5. Unit according to claim 1, characterised in that it comprises three coils (120, 130), two rigid spacers (21) of the same length, each situated between two of the three coils, and two spacers of elastic material (22) of the same length, each compressed between one of the two flanges (23) of the tube (8) and the aforesaid assembly of the three coils and the two rigid spacers.
